# FASCICULE DE BREVET EUROPEEN

(11) **EP 3 370 852 B1**
(45) Date de publication et mention de la délivrance du brevet: **28.09.2022**
(21) Numéro de dépôt: 16791582.6
(22) Date de dépôt: 04.11.2016
(51) Int. Cl.: B01D 53/30, B01D 53/34, B01D 53/62, B01D 53/84

(54) **REGULATION DE SYSTEMES D'EPURATION D'AIR**
STEUERUNG VON LUFTREINIGUNGSSYSTEMEN
CONTROLLING AIR PURIFICATION SYSTEMS

(30) Priorité: 06.11.2015 FR 1560666
(43) Date de publication de la demande: 12.09.2018
(73) Titulaire: SUEZ Groupe, 92040 Paris la Défense CEDEX (FR)
(72) Inventeur: LABAQUERE, Hervé, 01400 Chatillon Sur Chalaronne (FR); HEINRICH, Arnaud, 92140 Clamart (FR); DE CHEZELLES, Marie-Cécile, 92300 Levallois-Perret (FR)
(74) Mandataire: Atout PI Laplace
(86) Numéro de dépôt international: PCT/EP2016/076708
(87) Numéro de publication internationale: WO 2017/077061

(56) Documents cités:
- WO-A1-2014/063229
- WO-A2-2007/130408
- DE-A1- 19 533 238

## Description

### Domaine de l'invention

L'invention concerne des procédés de régulation de systèmes d'épuration de l'air, et des systèmes d'épuration de l'air, en particulier de l'air urbain, lesdits systèmes étant en particulier commandés à distance et/ou étant régulés selon différents types d'asservissement.

### Etat de la Technique

Un puits de carbone ou puits à dioxyde de carbone (CO2) est un réservoir, naturel ou artificiel, qui absorbe le carbone de l'atmosphère et contribue à diminuer la quantité de dioxyde de carbone atmosphérique. La taille de tels réservoirs est variable. Les principaux puits de carbone naturels sont les océans, les sols (humus, tourbières) et certains milieux vitalistes (forêt en formation). Les puits de carbone considérés par les industriels comprennent des bioréacteurs, généralement fondées sur le processus de la photosynthèse.

Un exemple de système d'épuration de l'air contaminé qui passe dans des colonnes d'épurateur biologique est décrit dans WO 2007/130408 A2.

La demande de brevet FR2945215 divulgue un autre exemple de procédé de traitement de l'air ambiant consistant à placer dans l'environnement à traiter un réservoir contenant un milieu dans lequel se développent des micro-organismes autotrophes tels que des algues par photobioréaction grâce à une source lumineuse placée dans ou à proximité du réservoir, le réservoir autorisant des échanges entre le milieu et l'air de l'environnement à traiter, les micro-organismes autotrophes générant des éléments calcifiés à partir du dioxyde de carbone présent dans l'environnement à traiter. Cette approche présente des inconvénients, qui s'opposent à l'utilisation massive de telles installations. Par exemple, un problème technique significatif réside dans la nécessité de la collecte du compost, laquelle est malaisée en milieu urbain (e.g. logistique, nuisances olfactives) et également du point de vue économique.

Il existe un besoin pour des procédés et des systèmes avancés de traitement de l'air, en particulier en milieu urbain.

### Résumé de l'invention

Les modes de réalisation de l'invention fournissent un procédé de régulation d'un système d'épuration d'air selon la revendication 1, un produit programme d'ordinateur selon la revendication 8 et un système de traitement d'air selon la revendication 9. D'autres caractéristiques complémentaires sont définies dans les revendications dépendantes.

Le système peut être raccordé au réseau d'assainissement et/ou à un réseau de distribution d'eau (potable et/ou de ville). Le raccordement et le système de vidange peuvent notamment maintenir une isolation fluidique entre les deux types de réseaux. Le système peut optionnellement être instrumenté de capteurs de mesure et/ou d'actionneurs permettant de réguler l'activité interne du bioréacteur. Différents modes de régulation d'une grille de bioréacteurs sont décrits. Des données d'état des réseaux connectés (e.g. réseaux d'eau, d'assainissement, de froid, de chaleur) contribuent à la régulation d'un réseau de bioréacteurs géolocalisés. Des aspects de logiciel sont décrits. La supervision de la grille de bioréacteurs peut notamment s'effectuer à distance via des dispositifs de communication embarqués.

Il est divulgué un dispositif de régulation d'un bioréacteur à micro algues permettant sa connexion de l'espace public urbain à un réseau collectif d'assainissement et de réaliser ainsi un cycle vertueux de captation du dioxyde de carbone et de production de biogaz.

Il est divulgué un dispositif de régulation d'un bioréacteur à micro algues permettant sa connexion de l'espace public urbain à un réseau collectif d'assainissement et de réaliser ainsi un cycle vertueux de captation du dioxyde de carbone et de production de biogaz.

Avantageusement, le puits de carbone selon l'invention peut être intégré dans le mobilier urbain.

Avantageusement, le puits de carbone selon l'invention est raccordable ou raccordé au réseau d'assainissement urbain.

Avantageusement, en capitalisant sur les réseaux d'assainissement existants, l'invention créée une valeur d'usage économique nouvelle et supplémentaire de ces réseaux d'assainissement.

Avantageusement, une gestion appropriée et/ou automatisée de la vidange du réacteur biochimique maintient une capacité d'absorption du CO2 maximale, par exemple en optimisant la croissance de la biomasse des micro-algues.

Avantageusement, des modes de réalisation de l'invention permettent de mesurer la quantité de matière organique rejetée au réseau et en particulier d'empêcher la remontée d'odeurs nauséabondes, nuisances olfactives et/ou visuelles, voire de nuisibles (e.g. cafards, insectes, vers, rats, etc) vers l'espace public.

Avantageusement, le puits de carbone selon l'invention peut être mis en réseau. Des développements décrivent la gestion d'un parc ou réseau de puits urbain: la régulation de tels réseaux de puits urbain peut être effectuée selon différentes modalités.

Avantageusement, en complément ou en substitution, le système selon l'invention permet la production de biogaz.

Avantageusement, le système selon l'invention permet de réaliser un cycle vertueux de captation du dioxyde de carbone.

Avantageusement, le système selon l'invention répond à plusieurs préoccupations majeures des villes contemporaines: a) la réduction de gaz à effet de serre b) l'amélioration de la qualité de l'air urbain c) la production d'énergie renouvelable.

Avantageusement, les procédés et systèmes selon l'invention participent à la transition énergétique.

Avantageusement, selon les modes de réalisation, les procédés et systèmes selon l'invention peuvent s'appliquer au traitement de (i) l'air urbain chargé en CO2 (zones de trafic routiers, sortie bouches de métro, parking), (ii) le traitement de l'ère industrielle (fumées de combustion de l'air industriel e.g. chaufferie, incinération etc) mais également au (iii) traitement de l'air domestique (« ficus amélioré »)

Avantageusement, dans un mode de réalisation, le système selon l'invention améliore la qualité de l'air en captant le dioxyde de carbone.

Dans certains modes, de réalisation, certains composés chimiques (e.g. polluants) et/ou particules ou classes de particules sont capturés (e.g. précipités et évacués).

### Description des figures

D'autres caractéristiques et avantages de l'invention apparaîtront à l'aide de la description qui suit et des figures des dessins annexés dans lesquels:
La figure 1 illustre un exemple particulier d'un mode de réalisation de l'invention spécifique au milieu urbain ;
La figure 2 illustre un mode de réalisation de l'invention pour le traitement de l'air urbain ;
La figure 3 montre des aspects d'un exemple de système de vidange d'un réacteur pour le raccordement au réseau d'assainissement ;
La figure 4 illustre des exemples d'aspects de l'invention, notamment des modes de gestion du réacteur raccordé et des caractéristiques facultatives ;
La figure 5 montre un exemple de réseau de bioréacteurs selon l'invention.

### Description détaillée de l'invention

Le principe général de l'invention consiste à disposer un réacteur biochimique dans l'environnement, à contrôler les réactions biochimiques s'effectuant dans ce réacteur, par exemple en y injectant de la matière et/ou de l'énergie et, après traitement biochimique au sein du réacteur, à en récupérer de la matière transformée et/ou de l'énergie, directement ou indirectement. Au moins une partie des agents biochimiques du réacteur est dirigée vers un réseau 120 (par exemple d'assainissement public). La gestion d'un parc ou d'un réseau constitué d'une pluralité de réacteurs peut être régulée selon différentes modalités.

Les systèmes et les procédés selon l'invention peuvent être déclinés en de nombreuses variantes. Des variantes comprennent notamment le nombre et le type de réacteur, le type et les surfaces de capture et/ou d'émission des sous-produits du réacteur, le type de raccordement à un ou plusieurs réseaux - par exemple d'assainissement public mais pas seulement -, les modalités de régulation d'un réseau constitué d'une pluralité de réacteurs au moins partiellement interconnectés, le dimensionnement général des installations (depuis des grandeurs millimétriques jusqu'à des installations majeures, de type gratte-ciel), etc.

Différents modes de réalisation sont décrits ci-après.

Il est divulgué un procédé mis en œuvre par ordinateur de régulation d'un système d'épuration d'air comprenant un bioréacteur, le procédé comprenant les étapes consistant à recevoir les mesures des taux de concentration d'un ou de plusieurs polluants et/ou de particules dans des flux d'air en entrée et en sortie d'un bioréacteur contenant de l'eau et une biomasse épurant au moins partiellement une partie de ces polluants et/ou particules; en fonction de paramètres de régulation comprenant les mesures des taux de concentration reçues, déterminer un volume de biomasse à évacuer du bioréacteur vers un réseau d'assainissement raccordé au bioréacteur.

Dans un développement, le procédé comprend en outre une étape consistant à évacuer ledit volume déterminé de biomasse dans ledit réseau d'assainissement.

Dans un développement, le procédé comprend une étape consistant à réintroduire un volume d'eau dans le bioréacteur, par exemple après une vidange. L'eau neuve peut aussi être introduite avant une vidange combinée eau/biomasse.

L'alimentation en eau (entrée du bioréacteur) et l'évacuation de la biomasse (sortie du bioréacteur) sont des variables interdépendantes (ou corrélées ou gérées en combinaison). Dans certains modes de réalisation, il n'est pas procédé à des apports d'eau neuve par le réseau, mais uniquement par une citerne intégrée. Dans certains modes de réalisation, un filtre additionnel permet de renouveler la quasi-totalité de l'eau du milieu de culture. Dans certains modes de réalisation, le volume de biomasse évacué est compensé par un volume équivalent d'eau neuve.

Le réseau d'assainissement peut être un réseau public (i.e. les égouts), ou un réseau privé (par exemple industriel).

Un bioréacteur peut contenir des agents microbiologiques divers qui peuvent traiter l'air (atmosphérique, ambiant, industriel, urbain, domestique, etc) en épurant (i.e. éliminant et/ou filtrant et/ou fixant et/ou précipitant et/ou métabolisant) certains composés chimiques présents dans l'air, notamment un ou plusieurs polluants et/ou des particules toxiques ou nocives.

Afin de maintenir une efficacité optimale de traitement ou d'épuration de l'air, i.e. un métabolisme optimal dans le bioréacteur, il est avantageux de le vidanger partiellement, à certains moments, dans certaines proportions et dans certaines conditions judicieusement choisis.

Un polluant (atmosphérique) est un élément chimique en excès par rapport à un seuil prédéfini.

Un polluant est un altéragène biologique, physique ou chimique, qui au-delà d'un ou de plusieurs seuils prédéfinis, et parfois dans certaines conditions (potentialisation), développe des impacts négatifs sur tout ou partie d'un organisme, d'un écosystème ou de l'environnement en général. Un polluant peut dans certains cas être défini comme un contaminant d'un ou plusieurs compartiments des écosystèmes (air, eau, sol) et/ou d'un organisme (e.g. l'Homme) ou ayant une incidence sur l'écosystème, au-delà d'un seuil ou norme prédéfinie (scientifique et/ou juridique).

Les polluants peuvent être de différente nature (substance solide, liquide ou gazeuse), anormalement présents dans un environnement donné. Les polluants peuvent être des "micropolluants" i.e. des produits actifs (minéraux ou organiques) toxiques à des concentrations infimes (de l'ordre du µg/l ou moins) ou des "macro-polluants" i.e. des substances ou molécules d'origine naturelles ou non, se trouvant dans l'environnement à des concentrations anormales, avec des effets négatifs sur le Vivant.

Les matières particulaires (PM, en anglais *Particulate Matter)* désignent les particules en suspension dans l'atmosphère terrestre. Les matières particulaires dans leur ensemble sont désormais classées cancérogènes pour l'homme.

La liste non-limitative des polluants et/ou particules manipulables et/ou manipulées par les procédés ou les systèmes selon l'invention comprend notamment: le dioxyde de soufre (SO2), les oxydes d'azote (NOx) dont le dioxyde d'azote (NO2), les particules fines PM10, PM2,5, le monoxyde de carbone (CO), le benzène (C6H6), l'arsenic (As), le Cadmium (Cd), le nickel (Ni), le plomb (Pb), les hydrocarbures aromatiques polycycliques (HAP) comme le benzo[a]pyrène (B[a]P) et plus généralement les gaz à effet de serre (e.g. dioxyde de carbone CO2, l'ozone O3 hyperoxydante , protoxyde d'azote N2O, hexafluorure de soufre SF6 et halocarbures dont les CFC).

Les traitements biologiques de l'air peuvent également concerner la désodorisation, par exemple à partir de bactéries qui vont capter des molécules organiques odorantes tels que des mercaptans ou l'hydrogène sulfuré..

Dans un développement, le bioréacteur est raccordé à un réseau de distribution d'eau pour alimenter le milieu de culture dudit bioréacteur.

L'alimentation en eau (entrée du bioréacteur) et l'évacuation de la biomasse (sortie du bioréacteur) sont des variables interdépendantes (ou corrélées ou gérées en combinaison). Dans certains modes de réalisation, il n'est pas procédé à des apports d'eau neuve par le réseau, mais uniquement par une citerne intégrée. Dans certains modes de réalisation, un filtre additionnel permet de renouveler la quasi-totalité de l'eau du milieu de culture. Dans certains modes de réalisation, le volume de biomasse évacué est compensé par un volume équivalent d'eau neuve.

Dans un développement, l'air épuré est l'air ambiant, en particulier l'air ambiant en milieu urbain. La géolocalisation d'un ou de plusieurs réacteurs peut être optimisée de façon à optimiser le traitement d'air. Dans un développement, au moins un polluant est un polluant gazeux dans l'air ambiant, préférentiellement le gaz à effet de serre CO2 (i.e. au-delà d'un certain seuil naturel et/ou légal).

Dans un cas particulier, l'invention peut constituer un puits de carbone.

Dans un tel cas, les taux de CO2 sont mesurés en entrée et en sortie (de manière continue, ou de manière périodique, ou de manière intermittente, ou de manière opportuniste i.e. sur événement). Si la fixation du CO2 s'amenuise, il peut par exemple être déterminé que de la biomasse est en excès; dans ce cas, une partie de la biomasse est évacuée et/ou de l'eau neuve est apportée dans le milieu de culture.

Dans un développement, le bioréacteur est un photo-bioréacteur et les paramètres de régulation comprennent des paramètres associés à l'activité interne du bioréacteur, ces paramètres comprenant une ou plusieurs données choisies parmi : le PH, la température, la turbidité, la conductivité mesurés dans le milieu de culture du bioréacteur, et la quantification des flux lumineux reçu par le milieu de culture du bioréacteur.

Les paramètres de régulation comprennent en outre des données externes au bioréacteur, ces données externes comprenant des données associées à l'état du réseau d'assainissement et/ou des données associées à l'état du réseau d'alimentation en eau du bioréacteur.

Les données externes au bioréacteur comprennent des données relatives à l'entrée du système (eau) et à la sortie (assainissement). Les données relatives au réseau d'assainissement comprennent des données de niveau des eaux/boues, des données de maintenance, des données topologiques ou topographiques ou de cartographie, etc. Les données associées à l'état du réseau d'alimentation en eau du bioréacteur comprennent des données de qualité de l'eau, de pression, de débit, des données de maintenance, etc.

Dans un développement, les paramètres de régulation comprennent des données de mesure du niveau des eaux usées présentes dans le réseau d'assainissement. L'expression « niveau des eaux usées » désigne également le « niveau d'effluent circulant » ou le « niveau des boues ».

Dans un développement, les paramètres de régulation comprennent des données de mesures et/ou de prévisions météorologiques.

Les données météorologiques peuvent avoir des conséquences directes ou au moins indirectes sur le niveau des égouts. Des niveaux de boues élevées (pluies fortes) tendraient à augmenter la capacité de transport de la biomasse évacuée. Toutefois, des niveaux élevés peuvent parfois saturer les stations d'épuration en aval, ce qui amène généralement à favoriser les évacuations du bioréacteur en cas de niveaux bas dans le réseau d'assainissement.

Dans un développement, le procédé comprend en outre des règles de gestion pour déterminer le volume de biomasse à évacuer (le volume à évacuer est déterminé par application de règles de gestion, e.g. selon la logique floue ou un système expert)

Les règles de gestion peuvent être prédéfinies. En totalité ou en partie, elles peuvent être modifiables à distance. Les règles permettent de gérer la biomasse (influx lumineux, apports d'eau, apports de nutriments, etc) pour notamment optimiser les cycles de croissance, arrêter l'activité si besoin, etc. Les règles peuvent statiques et/ou invariantes. Elles peuvent être dynamiques (e.g. règles chaînées).

Dans un développement, le bioréacteur comprend des capteurs de mesure et/ou des actionneurs pilotables à distance afin de réguler l'activité du réacteur.

Dans un développement, le procédé comprend une étape consistant à recevoir les données associées à une pluralité de bioréacteurs raccordés à un même réseau d'assainissement, lequel réseau d'assainissement est éventuellement raccordé à une ou plusieurs stations de production de biogaz.

Dans un développement, la pluralité de bioréacteurs est raccordée à un même réseau de distribution d'eau pour alimenter le milieu de culture des bioréacteurs.

La pluralité de bioréacteurs raccordés à un même réseau d'assainissement constitue un réseau ou une grille. Les bioréacteurs sont géolocalisés; leur emplacement géographique respectif est déterminé ou déterminable. Supervisés globalement ou par négociation de pair-à-pair, les états voisins d'un bioréacteur donné peuvent être connus.

Dans un développement, le procédé comprend une étape consistant à réguler la pluralité des bioréacteurs en fonction de données de géolocalisation desdits bioréacteurs, de données associées à l'état du réseau d'assainissement et/ou des données associées à l'état du réseau d'alimentation en eau du bioréacteur et/ou aux données associées à l'état de la production de biogaz.

La régulation de la grille de bioréacteurs peut notamment comprendre des étapes d'optimisation multiobjectif, les objectifs étant associés à un ou plusieurs bioréacteurs et/ou au réseau d'assainissement et/ou au réseau d'alimentation en eau et/ou à la production de biogaz en aval.

Le procédé de régulation de la grille ou du réseau de bioréacteurs peut notamment viser à maximiser la fixation du CO2 de l'air atmosphérique par un ou plusieurs bioréacteurs. On peut également chercher, de manière subsidiaire, à maximiser la production de biogaz à partir de la biomasse évacuée par un ou plusieurs bioréacteurs.

Dans un développement, les objectifs ou critères d'optimisation d'un ou de plusieurs bioréacteurs comprennent la minimisation ou la maximisation ou l'optimisation de la captation d'une ou de plusieurs matières prédéfinies (polluants/particules) dans l'environnement depuis un ou plusieurs bioréacteurs, l'état de croissance qualitatif et/ou quantitatif de la biomasse présente dans un ou plusieurs bioréacteurs, l'émission gazeuse ou le rejet liquide ou solide de matières prédéfinies hors d'un ou plusieurs bioréacteurs.

Dans un développement, les critères d'optimisation des rejets d'un bioréacteur dans le réseau d'assainissement comprennent la prise en compte de données externes de prévisions météorologiques, ces données comprenant notamment des données de pluviométrie, de température et d'ensoleillement.

Il est divulgué un produit programme d'ordinateur, ledit programme d'ordinateur comprenant des instructions de code permettant d'effectuer les étapes du procédé, lorsque ledit programme est exécuté sur un système de contrôle-commande avec ordinateur qui régule le système de traitement d'air.

Il est divulgué un système de traitement de l'air comprenant des moyens pour la mise en œuvre des étapes du procédé.

Dans un développement, le système comprend un bioréacteur, des entrées et des sorties d'air; le bioréacteur étant configuré pour être raccordé à un réseau d'assainissement pour l'évacuation d'au moins une partie de la biomasse.

Le réacteur peut être fixe et installé dans l'environnement urbain mais il peut aussi être amovible et/ou temporaire. Il est adapté à un raccordement à un réseau d'assainissement, mais peut comporter des moyens complémentaires d'évacuation de la biomasse (par exemple en excès).

Dans un développement, le bioréacteur est un photo-bioréacteur comprenant des micro-organismes photosynthétiques.

Les micro-organismes photosynthétiques en suspension dans l'eau peuvent être des bactéries photosynthétiques et/ou des cyanobactéries et/ou des micro-algues eucaryotes et/ou des cellules isolées de plantes multicellulaires et/ou des gamétophytes de macro-algues et/ou des protonemata de mousse. Le cas échéant, le réservoir ou cuve ou enceinte contenant la biomasse est au moins partiellement transparent à la lumière (généralement en verre ou plastique transparent ou translucide).

Dans un développement, le bioréacteur est raccordé à un réseau de distribution d'eau pour alimenter le milieu de culture du bioréacteur.

Dans un développement, le réseau de distribution d'eau est un réseau d'eau de ville non potable prétraité.

Le réacteur selon l'invention peut ne pas être raccordé du tout à un réseau d'eau en entrée : le réacteur selon l'invention peut être « préchargé » en eau. Avantageusement, il peut être raccordable et/ou raccordé à un réseau d'eau, lequel peut être un réseau d'eau potable et/ou un réseau d'eau de ville non potable (eau de Seine prétraité).

Dans un développement, le système comprend en outre un système de vidange du bioréacteur maintenant une isolation fluidique entre le réseau d'eau et le réseau d'assainissement.

Dans un développement, le système de vidange comprend au moins deux réservoirs et des électrovannes contrôlables à distance, les réservoirs étant configurés pour être vidangés en alternance de manière à maintenir une isolation fluidique entre le réseau d'eau et le réseau d'assainissement.

Dans un développement, le bioréacteur est raccordé à un réseau de chaleur et/ou un réseau de froid.

Dans un développement, le bioréacteur raccordé selon l'invention comprend un dispositif de régulation de la température du bioréacteur. La température du bioréacteur peut être régulée, notamment avec un échangeur à chaleur et/ou un réseau de chaleur et/ou des appareils de chauffage.

Un échangeur thermique peut être utilisé (refroidisseur à gaz ou dispositif de chauffage) mais avantageusement le système selon l'invention sera couplé avec une infrastructure existante, comme un réseau de chaleur (réseau de chauffage urbain ou réseau de chauffage privé ou industriel) ou un réseau de froid. Le réseau de chaleur peut être un réseau de vapeur (e.g. privé ou public), un réseau de géothermie. Un réseau de froid est l'équivalent d'un réseau de chaleur, mais dédié au transport et à la distribution de « frigories » plutôt que de calories.

Dans un développement, le système comprend une ou plusieurs sources de lumière artificielle pour réguler l'activité du bioréacteur.

Optionnellement, le système selon l'invention peut comprendre des réflecteurs et/ou des concentrateurs de la lumière naturelle, pour améliorer l'activité du bioréacteur.

Dans un développement, le système comprend un ou plusieurs panneaux photovoltaïques pour alimenter une ou plusieurs sources de lumière artificielle.

Optionnellement, le système selon l'invention peut comprendre des réflecteurs et/ou des concentrateurs de la lumière naturelle, pour améliorer l'activité du bioréacteur.

Dans un développement, le système comprend un ou plusieurs capteurs choisis parmi un pH-mètre, un thermomètre intérieur, un thermomètre extérieur, une sonde oxymétrique, un capteur de niveau, un capteur de conductivité du milieu de culture, un capteur adapté à la mesure du taux de CO2 dans l'air du bioréacteur et/ou de l'atmosphère, un capteur adapté à la mesure du taux de O2 dans l'air du bioréacteur et/ou de l'atmosphère et un capteur adapté à la mesure du CO2 dissous dans le milieu de culture de la biomasse.

Dans un développement, le bioréacteur comprend en outre un ou plusieurs actionneurs pour réguler les débits d'air en entrée et/ou en sortie, et/ou pour agiter la biomasse du réacteur, et/ou pour réguler l'influx lumineux naturel et/ou artificiel et/ou pour réguler la température. Réguler signifie en particulier pouvoir régler ou ajuster.

Dans un développement, les débits des entrées d'air et/ou des sorties d'air du bioréacteur sont contrôlables ou configurables (notamment à distance). Les E/S ou I/O sont notamment contrôlables à distance. Elles permettent des fonctionnements aérobie et/ou anaérobie, suivant le type de réacteur utilisé. Dans un développement, le bioréacteur raccordé selon l'invention comprend un ou plusieurs dispositifs de ventilation. Ces dispositifs comprennent par exemple un ou plusieurs ventilateurs et/ou compresseurs.

Dans un développement, le bioréacteur raccordé selon l'invention comprend en outre un ou plusieurs actionneurs adaptés à agiter la biomasse du réservoir.

Dans un développement, le bioréacteur raccordé selon l'invention comprend en outre un ou plusieurs actionneurs adaptés ou configurés pour réguler l'influx lumineux naturel et/ou artificiel. Le système selon l'invention peut comprendre des stores ou des volets roulants par exemple. L'opacité des vitres ou parois du réservoir exposant les micro-algues peut également être contrôlée.

Dans un développement, le bioréacteur raccordé selon l'invention comprend une ou plusieurs voies d'accès pour l'injection de composés biologiques et/ou chimiques au sein du bioréacteur. Par exemple, le système selon l'invention peut comprendre des accès permettant l'injection dans le réacteur de produits tels que des engrais, des solvants, des additifs ou des colorants.

Dans un développement, le bioréacteur raccordé selon l'invention comprend en outre des moyens d'évacuation d'au moins une partie de la biomasse indépendants du réseau d'assainissement. La biomasse en excès ou inutile ou non efficace peut être évacuée localement, sans passer par le réseau d'assainissement (ou pas exclusivement, par exemple de manière temporaire ou en appoint).

Dans un développement, le système comprend en outre un dispositif de communication permettant de contrôler à distance l'activité du bioréacteur.

Dans un développement, le système comprend en outre un dispositif de communication bidirectionnel permettant de contrôler à distance l'activité du bioréacteur.

L'activité du bioréacteur se régule notamment par la gestion des apports en eau, de la biomasse évacuée, des apports lumineux ou de nutriments.

Les données des capteurs peuvent être accédées à distance. La prise de contrôle des actionneurs peut être effectuée à distance (régulation de l'activité du bioréacteur, notamment par le contrôle des apports en eau, en nutriments, des influx solaire et naturel, de l'agitation de la biomasse et de l'aération)

Dans un développement, le système comprend une pluralité de bioréacteurs.

Les bioréacteurs peuvent être positionnés dans une zone géographique prédéfinie de manière à maximiser la capture de CO2 et/ou à maximiser les émissions de O2 dans l'atmosphère de la zone géographique.

Dans un développement, un ou plusieurs bioréacteurs sont raccordés à un ou plusieurs dispositifs de production de biogaz.

Un bioréacteur peut être associé à une unité de production de biogaz à proximité immédiate. Dans le cas général, l'entité de production de biogaz est située à distance. Une pluralité de bioréacteurs peut être raccordée via le réseau d'assainissement à une station d'épuration et de production de biogaz (e.g. méthane).

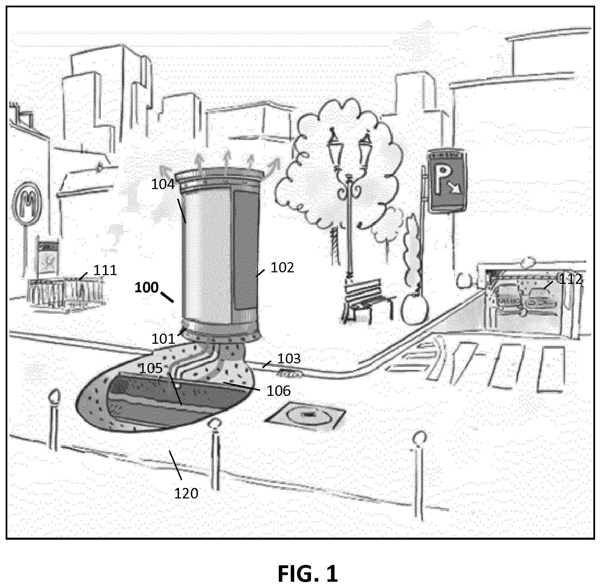

La figure 1 illustre un exemple particulier d'un mode de réalisation de l'invention spécifique au milieu urbain.

Dans un mode de réalisation, tel qu'illustré la figure 1, le réacteur est un photo-bioréacteur (PBR) ou un bioréacteur à micro algues 100. Des micro-algues sont exposées à la lumière à travers des surfaces transparentes 101 (dans l'exemple, les surfaces vitrées sont disposées sur un mobilier urbain de type colonne Morris 102). Le puits de carbone est intégré dans ou revêt la forme d'un mobilier urbain installé au sein de l'espace public. Les micro-algues effectuent des cycles de photosynthèse biochimique et constituent un puits de carbone: le dioxyde de carbone est partiellement capturé ou fixé par les algues et du dioxygène est relâché dans l'environnement 104. La biomasse des micros algues évolue au cours du temps. A un certain seuil prédéfini, et selon différentes modalités, une partie de la biomasse créée est éliminée, par exemple via des conduites 105 de vidange 106 vers un ou plusieurs réseaux d'assainissement 120. Dans un mode de réalisation particulier, l'effluent, composé de micro-algues et de leur milieu de culture, issu du process d'absorption du CO2 est évacué via un branchement particulier 105 au réseau d'assainissement urbain 120.

Un puits de carbone 100 selon l'invention peut être placé à un endroit judicieux ou opportun ou stratégique ou pertinent ou optimisé au sein de l'espace public, c'est-à-dire à un endroit où l'air urbain est particulièrement chargé en CO2. Par exemple, le puits de carbone peut être placé à proximité d'une bouche d'aération de métro 111 et à proximité d'une sortie de garage 112.

De manière plus générale, en matière de captation, les lieux urbains à fortes émissions de CO2 fournissent des endroits propices à l'installation du système selon l'invention : tunnels routiers, échangeurs, zones à circulation routière particulièrement dense, tels que le périphérique parisien, etc. Par ailleurs, en matière d'émission, des emplacements favorables comprennent des zones sensibles telles que les écoles, les hôpitaux ou les zones d'habitation urbaine à densité forte de population. Des modélisations informatiques et/ou des mesures quant à la circulation et à la qualité de l'air peuvent permettre d'optimiser les différents compromis effectués entre optimisations en matière de la capture du CO2 (et/ou des polluants) et les optimisations en matière de dioxygène (ou autre sous produit sélectionné).

Les modes de réalisation utilisent un ou plusieurs bioréacteurs arrangés en série et/ou en parallèle. Un bioréacteur ("fermenteur" ou "propagateur"), est un système dans lequel sont multipliés des micro-organismes (e.g. des levures, bactéries, champignons microscopiques, algues, cellules animales et végétales, de manière homogène ou en combinaison) pour la production de biomasse et/ou pour la production d'un métabolite ou encore la bioconversion d'une molécule d'intérêt.

Un bioréacteur comporte généralement a) un réservoir ou une cuve ou une enceinte, par exemple en verre ou en acier inoxydable ; la forme du réservoir peut être plane (plaques de verres contenant les micro-algues) ou circulaire ou selon toute autre forme b) des voies d'accès pour la circulation de l'air entre le milieu intérieur et le milieu extérieur (ces voies peuvent être temporairement fermées ou colmatées) c) des voies d'accès pour l'injection d'eau et/ou de nutriments (engrais) et/ou de composés chimiques (solvants, additifs, colorants) ; l'eau injectée dans le milieu de culture peut être de l'eau potable et/ou de l'eau non-potable, par exemple l'eau du réseau d'eau de Seine prétraitée de la Ville de Paris; en d'autres termes, le réacteur selon l'invention peut utiliser de l'eau d'alimentation et/ou de l'eau de ville d) parfois des actionneurs (par exemple un système d'agitation pour mélanger ou faire circuler la biomasse dans le réacteur (e.g. turbines, bras articulés, etc) e) des capteurs ou senseurs (pour la mesure de la température, du pH, de la concentration en oxygène dissous, du niveau intérieur, etc) ; les capteurs peuvent donc comprendre un ou plusieurs pH-mètres, thermomètres, sondes oxymétrique, capteurs de pression, capteurs de niveau, etc. Ces différents capteurs ou sondes peuvent être positionnées de manière appropriée et optimisée au sein du bioréacteur de manière à dériver une image fidèle de la biodynamique interne du réacteur.

Un bioréacteur est généralement régulé par un système de contrôle-commande mis en œuvre par ordinateur, permettant de mesurer, d'enregistrer et de piloter tous les paramètres de fonctionnement du réacteur. Un bioréacteur peut dans certains cas être autonome i.e. autorégulé par la mise en œuvre de règle de gestion ne nécessitant pas d'intervention extérieure. Dans certains cas, le bioréacteur selon l'invention peut comprendre un réservoir d'arrêt d'urgence (en cas de dérive de la création de biomasse, cette dernière peut être arrêtée par l'injection d'eau de javel ou d'un mélange comprenant des fluides désherbants et/ou fongicide).

Dans un mode de réalisation, le bioréacteur comprend un photo-bioréacteur (reposant sur le cycle de la photosynthèse). Ce type de réacteur est connu. La demande de brevet FR2978159 divulgue par exemple un photo-bioréacteur pour la production en circuit fermé d'une solution algale concentrée comportant un récipient contenant la solution algale, et un moyen d'exposition de la solution algale à la lumière ; le moyen d'exposition comprend au moins une manche verticale réalisée en un matériau souple, transparent, résistant à la traction, cette manche étant suspendue à un support et remplie d'un liquide qui assure une forme cylindrique à cette manche, laquelle est en contact par sa paroi extérieure avec la solution algale.

Dans certains autres modes de réalisation, d'autres types réacteurs peuvent être utilisés, en combinaison ou en substitution du photo-bioréacteur, i.e. selon des procédés biochimiques différents (e.g. avec des bactéries dont la fonction a été déterminée par des techniques de biologie de synthèse ou de génie génétique).

Dans un mode de réalisation, un ou plusieurs colorants peuvent être utilisés. De la sorte, un mobilier urbain implémentant l'invention pourra apparaître au public selon différentes couleurs (e.g. rose, bleu ou de plusieurs couleurs) et non pas nécessairement vert (comme peuvent l'être les micro-algues).

Dans un mode de réalisation, le réacteur selon l'invention peut en outre comprendre une ou plusieurs sources de lumière artificielle. Par exemple, le système selon l'invention peut comprendre des diodes électroluminescentes (LED pour Light Emitting Diode) ou des lampes de croissance, dont le spectre lumineux peut être adapté ou optimisé pour la croissance des micro-algues (bandes d'absorption spécifiques à la photosynthèse)

Dans un mode de réalisation, le réacteur selon l'invention peut comprendre des moyens de captation du flux luminaire solaire, y compris éventuellement des moyens de concentration (e.g. panneaux réfléchissants ou réflecteurs, loupes, etc) et/ou des moyens de modulation de l'influx lumineux (e.g. volets roulants ou à lattes, stores inclinables, opacité variable des surfaces vitrées, etc).

Dans un mode de réalisation, le réacteur selon l'invention peut comprendre une combinaison d'influx de lumière naturelle et artificielle. Avantageusement, les sources lumineuses artificielles peuvent palier à des déficits temporaires de luminosité naturelle, via des accumulateurs et/ou des panneaux solaires par exemple. Même sans déficit ponctuel, l'emploi de sources artificielles peut maintenir la photosynthèse des micro-algues à des niveaux intenses. De nombreuses régulations de l'activité du bioréacteur deviennent possibles. Par exemple, des panneaux photovoltaïques rechargés le jour peuvent alimenter les sources de lumière la nuit et assurer la croissance des algues, permettant de fait une photosynthèse ininterrompue des micro-algues (ou équivalent). L'utilisation combinée des deux types de sources peut également permettre de maintenir un flux lumineux constant.

Les flux de lumière (artificiels et/ou naturels) passant au travers des surfaces vitrées ou transparentes ou translucides (exposant les micro-algues pour les cycles de photosynthèse) peuvent être configurables et/ou contrôlés, afin de réguler l'évolution de la biomasse. Par exemple, des stores ou des volets peuvent permettre de moduler de manière appropriée les flux lumineux. L'opacité des vitres peut également être configurable (l'application d'un courant électrique peut obscurcir ou éclaircir une vitre). Dans un mode de réalisation, un ou plusieurs réacteurs miniatures sont intégrés dans des panneaux solaires à opacité configurable.

Le dimensionnement des systèmes selon l'invention est très variable.

Dans un mode de réalisation, un réacteur de type « urbain » peut présenter une capacité de 1 m³ de micro algues équivalente à la production de dioxygène d'une cinquantaine d'arbres (e.g. platanes). Un puits de carbone contenant 1 m³ de micro algues fixe environ 1 tonne de CO2 par an, libère plus de 600 kg d'oxygène dans l'air de la ville, produit plus de 350 m3 de bio méthane et permet l'injection en réseau plus de 3500 kWh de bio gaz.

Dans un mode de réalisation, un réacteur (de type « industriel ») mis en œuvre par l'invention peut présenter une capacité de 6000 m3 (représentant 5000 tonnes par an de C02 capté, ce qui est de l'ordre de grandeur de la biomasse équivalente au bois de Boulogne d'une surface de 850 Ha).

Les formes concrètes d'implémentation des systèmes et procédés selon l'invention peuvent donc être déclinées de multiples manières, notamment sous forme de mobilier urbain (e.g. colonne Morris, abribus, panneaux publicitaires, toitures...), d'équipements urbains (e.g. toitures vitrées, chaussées, etc), d'installations industrielles (e.g. réacteur d'assainissement de l'air à proximité de zones industrielles), d'appareils domestiques (e.g. purificateur d'air amélioré et raccordé au réseau d'égouts, etc). Les surfaces d'exposition des micros algues ou des agents biochimiques sont donc variables, depuis quelques mètres carrés jusqu'à des bâtiments entièrement recouverts de surfaces vitrées ou transparentes ou translucides exposant les micros algues ou agents biochimiques.

Dans un mode de réalisation de l'invention, la ventilation d'air peut être naturelle, i.e. le réseau de bioréacteurs capture le dioxyde de carbone à proximité des installations. Des moyens additionnels de ventilation peuvent être également utilisés pour permettre d'augmenter ou d'optimiser la capture du CO2. Les moyens de ventilation et/ou de concentration et/ou de compression de l'air urbain peuvent notamment comprendre un ou plusieurs ventilateurs. Un ventilateur peut être intégré au mobilier urbain comprenant un bioréacteur. Une pluralité de ventilateurs peut également être intégrée au mobilier urbain ou au bioréacteur lui-même. Les dimensions des ventilateurs sont variables, depuis des ordres de grandeur macroscopique (e.g. depuis des ventilateurs décamétriques jusqu'à des dispositifs de ventilation millimétriques) voire microscopique (e.g. utilisation de MEMS).

Dans un mode de réalisation, un compresseur connu de l'état de la technique peut être utilisé, par exemple d'une puissance de 75 W. Dans une telle configuration, pour un réacteur de 1 m³ environ, le débit d'air entrant est généralement de l'ordre de 6 m3/h en crête et de 2 m3/h en moyenne.

La direction du vent et plus généralement des flux d'air locaux autour des installations urbaines comprenant les ventilateurs peuvent être modélisés et/ou mesurés (par exemple au moyen d'anémomètres e.g. laser embarqués sur le mobilier urbain et/ou disposés selon un réseau de capteurs indépendants mais couplés avec les systèmes selon l'invention).

Selon un aspect de l'invention, il est divulgué un système d'épuration de l'air urbain comportant un raccordement au réseau d'assainissement.

Le réseau d'assainissement est généralement public (les égouts). Dans certains modes de réalisation, en complément ou en substitution du réseau d'assainissement public, des réseaux privés ou « propriétaires » ou dédiés peuvent être utilisés.

L'évacuation du compost ou de l'effluent peut s'effectuer (exclusivement) via le raccordement au réseau d'assainissement. Avantageusement, ce mode de réalisation ne nécessite pas de logistique dédiée.

Dans une variante de réalisation, l'évacuation du compost ou de l'effluent peut s'effectuer (exclusivement) par enlèvement physique ; par exemple des camions de collecte des déchets ménagers accèdent par des trappes aux surplus ou agrégats de compost desséchés. Des drones ou des véhicules automatisés peuvent procéder à la collecte d'agrégats, par exemple concentrés. Avantageusement, ce mode de réalisation ne nécessite pas d'accès au réseau d'assainissement.

Dans un mode de réalisation, l'évacuation du compost ou de l'effluent peut s'effectuer partiellement par collecte physique et partiellement par raccordement au réseau d'assainissement. Avantageusement, ce mode de réalisation permet d'optimiser le maillage, c'est-à-dire l'optimisation de la distribution des puits de carbone selon l'invention en milieu urbain (optimisation multicritères quant à la captation des matières à transformer, l'émission des matières transformées, l'évacuation des sous-produits selon la disponibilité des points d'accès au réseau d'assainissement, etc)

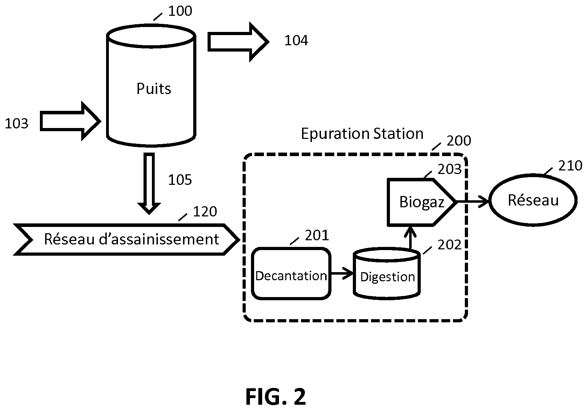

La figure 2 illustre un mode de réalisation de l'invention pour le traitement de l'air urbain.

Le puits de carbone 100 capture l'air urbain ambiant 103, rejette du dioxygène 104 dans l'atmosphère et des micros algues en excès 105 dans le réseau d'assainissement 120. Les effluents du puits de carbone selon l'invention s'ajoutent et se combinent aux flux des eaux usées, lesquelles parviennent à la station d'épuration 200. Après une première étape de décantation 201, les boues sont digérées (par des bactéries) à l'étape 202 et du bio gaz 203 est produit (par méthanisation, ou autre), lequel est réinjecté dans les réseaux d'énergie 210.

Dans un mode de réalisation particulier, le système selon l'invention peut comprendre un photo-bioréacteur à micro-algues 100. Le procédé de captation du dioxyde de carbone 103 atmosphérique est couplé avec un procédé de transformation du carbone en bio hydrocarbure 203 par méthanisation. Les micro-algues sont transportées jusqu'à une station d'épuration 200 disposant d'une filière de méthanisation contribuant en terme de substrat organique à la dite filière de méthanisation 203.

Le photo-bioréacteur 100 peut comprendre des algues unicellulaires de type *Chlorella,* qui capturent le CO2. De nombreux autres types de souche sont possibles, permettant notamment la fixation ou la capture ou la précipitation de particules présente dans l'air (urbain ou industriel). Un des procédés sous-jacents au fonctionnement du bioréacteur selon l'invention est donc celui de la photosynthèse.

Dans des variantes, l'absorption du CO2 peut aussi se faire au moyen de dissolvants aminés, en particulier l'éthanolamine (2-aminoéthanol). En étant en contact avec des gaz acides (comme le CO2), une solution aqueuse de 2-aminoéthanol forme un sel à température ambiante. La solution est alors transportée dans un milieu fermé où elle est chauffée à environ 120 °C, ce qui, selon le principe de Le Châtelier, libère le CO2 (pur) et régénère, en solution aqueuse, le 2-aminoéthanol. Des alternatives à ce processus chimique comprennent des techniques d'absorption par variation rapide de température/pression, la séparation des gaz, la cryogénie ou encore l'utilisation d'hydroxydes.

Enfin, d'autres modes de réalisation de l'invention peuvent comprendre des procédés biochimiques entièrement différents.

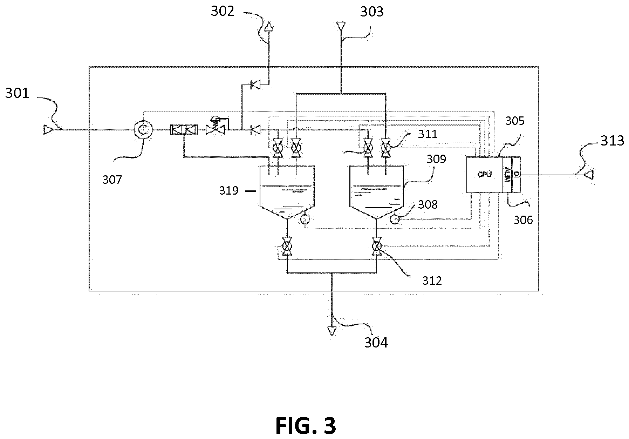

La figure 3 montre des aspects d'un exemple de système de vidange d'un réacteur pour le raccordement au réseau d'assainissement.

L'expression "eau de process" désigne l'eau produite par le procédé industriel selon l'invention. C'est en l'espèce une eau chargée en micro-algues (au moins dans certains modes de réalisation) et/ou du liquide constituant le milieu de culture des micro-algues.

Le schéma de la figure 3 détaille en particulier le fonctionnement du système d'évacuation (vidange) des eaux de process vers le réseau d'assainissement. L'interface entre le process d'absorption du CO2 et le réseau d'assainissement peut en effet être réalisée par un système de vidange spécifique.

Le système de vidange selon l'invention comporte pour son raccordement un branchement au réseau d'eau 301 (potable et/ou non-potable, par exemple l'eau du réseau d'eau de Seine prétraitée de la Ville de Paris), une alimentation en eau du process 302 (culture de micro-algues), un collecteur d'eau de process usagée chargée en algues 303, une évacuation vers le réseau d'assainissement 304 et un bornier de contrôle/puissance 306 (alimentation électrique).

Un signal de commande externe 313 provenant de la supervision automatisée ou d'un opérateur humain commande l'ouverture de l'électrovanne 311 assurant le remplissage du réservoir 309. Après fermeture de la vanne 311, une mesure de poids est réalisé par le capteur de force 308 puis le réservoir est vidangé via le branchement d'évacuation 304 par commande de l'électrovanne 312. Après fermeture de la vanne 312, une nouvelle mesure de poids est effectuée par le capteur de force 308. La masse de solution rejetée est obtenue par différence des deux mesures précédentes.

L'ouverture séquencée des électrovannes 311 et 312 assure la déconnection hydraulique avec le réseau d'assainissement. En d'autres termes, la déconnection des réservoirs implique que la vanne d'amenée d'eau de process 311 soit fermée lors de la phase de rejet au réseau d'assainissement pour laquelle la vanne 312 est ouverte.

Pendant la phase de remplissage du réservoir 309, le volume d'eau neuve injecté dans le process est mesuré par le compteur volumétrique 307. Un bilan journalier est établi par l'unité de contrôle centrale 305 par différence entre la masse d'eau entrant et la masse de solution sortant du dispositif.

L'absence de dépôt de matière organique dans le réservoir 309 est garantie par un revêtement intérieur non adhérent associé à un cycle de nettoyage déclenché par commande de l'électrovanne 312.

Dans le mode de réalisation de l'invention comprenant la culture de micro algues, les risques de migration ou de remontées des micro-algues par les différentes conduites (e.g. vers 301, 302 ou 303) est faible ou négligeable, étant donné que les micros algues sont photo-dépendantes (les excursions des micro-algues seront limitées dans l'espace). Dans les modes de réalisation de l'invention utilisant des procédés biochimiques différents, les conduites d'évacuation peuvent comprendre des clapets anti-retour et/ou être traitées chimiquement afin de minimiser ou d'éviter les remontées des agents biochimiques.

Dans un mode de réalisation, le système selon l'invention peut comprendre un capteur de force 308, qui mesure par exemple la résistance à un courant modifié en fonction de la force exercée. Différentes techniques concernant la pesée des volumes de sable sur les hydro cureurs peuvent être utilisées. D'autres techniques complémentaires pour mesurer le poids des micros algues sont possibles. Par exemple, des mesures (par exemple optique) de concentration des algues peuvent être conjuguées à la mesure des volumes (e.g. par mesure de niveau ou seuils).

De manière générale, le système selon l'invention peut comprendre une pluralité de réservoirs arrangés en parallèle.

Dans un mode de réalisation particulier de l'invention, le système peut comprendre deux réservoirs arrangés en parallèle. Selon cette configuration duale, la vidange est effectuée en alternance. L'utilisation de deux réservoirs de stockage 309 et 319 arrangé en parallèle permet un fonctionnement séquencé ou en alternance qui assure l'alimentation permanente du process en eau neuve et la déconnexion hydraulique avec le réseau d'assainissement. Un réservoir donné joue un rôle de « tampon » par rapport à l'autre et permet de maintenir un débit de « fuite », c'est-à-dire un apport d'eau neuve constant dans le photo-bioréacteur.

L'utilisation d'un grand nombre de photo-bioréacteur disposés en parallèle amoindrit les risques de défaillance du système global.

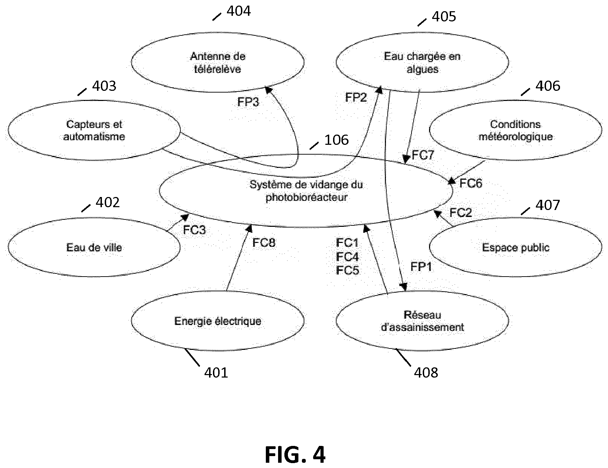

La figure 4 illustre des exemples de mises en œuvre de l'invention, notamment des modes de gestion du réacteur raccordé et des caractéristiques facultatives.

Dans un mode de réalisation, le photo-bioréacteur 106 peut être placé dans l'espace public 407, raccordé au réseau d'assainissement 408 et dispose d'un apport d'eau d'alimentation ou de ville 402 et d'énergie électrique 401. Le réacteur peut être instrumenté, par des capteurs et des automatismes 403, et comporte des moyens de communication, par exemple une antenne de télé relève 404. Cette antenne de télé-relève 404 autorise notamment une communication bidirectionnelle entre le système 106 selon l'invention et un poste de supervision (homme et/ou machine). Un signal de commande déclenche le maniement d'électrovannes entrainant l'évacuation des eaux de process chargée en algues 405 vers les réservoirs de stockage (par exemple 309) avant d'être évacuées vers le réseau d'assainissement 408. La mesure de la masse d'algue rejetée 405 est établie par différence de poids entre l'eau neuve entrant et l'eau usée sortant du dispositif, au moyen de différents capteurs.

Différents aspects de gestion d'un réacteur raccordé selon l'invention sont décrits ci-après.

De manière générale, la diminution de la température, du pH et de la concentration en matière organique des effluents peut être obtenue par effet de dilution : de l'eau (potable ou non-potable, par exemple l'eau non-potable provenant du réseau d'eau de Seine prétraitée de la Ville de Paris) peut être ajoutée pour atteindre les valeurs minimales prédéfinies requises.

Dans un mode de réalisation, un niveau d'eau minimum peut être laissé en fond de réservoir (par exemple 309) après vidange pour stopper les odeurs venant du réseau d'assainissement 408 à la manière d'un siphon. Les réservoirs sont par exemple pourvus d'un évent avec filtre à charbon actif.

Un dispositif de déconnexion (303, 311, 309, 308, 311) peut assurer la protection du réseau d'eau de ville.

Dans un mode de réalisation, les eaux de process passent par des réservoirs de stockage 309 et 319 dont l'ouverture des vannes de remplissage et de vidange est alternée.

Les rejets des effluents peuvent se faire par effet de chasse, ce qui a généralement comme effet de nettoyer la canalisation de rejet et ce qui empêche l'accumulation de matière solide. Optionnellement, les réservoirs sont munis d'un revêtement intérieur non-adhérent.

Les prévisions météorologiques peuvent avantageusement être prises en compte dans la régulation des rejets des effluents; par exemple des alertes de pluie ou d'orage transmise par l'intermédiaire des moyens de communication embarquée ou d'antennes de télé-relève 404 augmentent la probabilité de niveau élevé dans les réseaux d'assainissement, auquel cas les vidanges peuvent être différées dans le temps pour certaines parties de la grille ou réseau de bioréacteurs raccordés selon l'invention ou au contraire accélérées i.e. mises en œuvre de manière opportuniste dans certains autres secteurs.

Certaines formes spécifiques des réservoirs et leur revêtement intérieur non-adhérent peuvent contribuer à assurer l'absence de dépôt organique. Dans certains cas, un rinçage à l'eau du réseau peut être effectué (quotidiennement ou en fonction de mesures réalisées localement).

Le système selon l'invention peut comprendre un habillage urbain (éventuellement instrumenté) comprenant un photo-bioréacteur (généralement instrumenté), raccordé au réseau d'assainissement (surveillé)

Dans un mode de réalisation, l'enveloppe ou l'habillage urbain (e.g. colonne Morris, abribus, façade de bâtiment, chaussée ou portion de trottoir, toilettes publiques éventuellement payantes) peut comprendre des capteurs (e.g. panneaux photovoltaïque ou équivalent, avec ou sans accumulateur ou batterie, des détecteurs de présence ou de mouvement, mesure du taux de CO2 en entrée et en sortie, mesure du dioxygène ou d'un polluant déterminé, en entrée et/ou en sortie, etc) et/ou des actuateurs (haut-parleurs, volets actionnables à distance, etc). L'habillage du bioréacteur peut comprendre un ou plusieurs ventilateurs (entrées et ou sorties d'air), des accès de retrait de compost ou de portions de la biomasse, des accès d'ajouts de nutriments. Dans certains modes de réalisation, l'enveloppe de confinement du bioréacteur peut aussi comprendre des moyens de diffusion de parfums (pour annihiler ou masquer des odeurs non désirées), des moyens de diffusion acoustiques, des écrans d'affichage informatique (e.g. affichage de cartes touristiques ; l'affichage d'informations visuelles ou textuelles n'est pas exclusif de l'exposition des micro-algues, lesquelles peuvent croître derrière des écrans semi ou partiellement transparents), des moyens de projection (projection d'informations sur la chaussée ou les murs), des moyens de calcul (e.g. processeurs) et des moyens de communication (filaires ou sans fil, propres au système selon l'invention et/ou pour servir d'antennes relais publiques), etc. Des moyens tangibles et/ou logiques correspondant par exemple à des fonctions sociales peuvent être mis à disposition du public (e.g. rapports de santé de la biomasse, images de son évolution) voire des moyens permettant une interactivité avec le public.

En relation avec le bioréacteur, un certain nombre de paramètres peut être surveillé et/ou régulé. Ces paramètres peuvent comprendre notamment (par exemple et si applicable): le taux de CO2 de l'air en entrée, le taux de CO2 de l'air en sortie, le taux de CO2 dissous (par exemple dans le milieu de culture), la pression en sortie du compresseur (ventilateur), la turbidité (e.g. des mesures de rhéologie de la biomasse interne du réacteur), la concentration des micro-algues par mesure optique de la densité du milieu de culture, la température intérieure (sondée en différents endroits du bioréacteur), la température extérieure au réacteur (par exemple la température mesurée dans la rue), les influx lumineux (en particulier la mesure des apports solaires et/ou de du niveau d'éclairage artificiel), le pH (acidité ou basicité du milieu de la biomasse ou de l"eau de process), la conductivité (du milieu de la biomasse ou de l"eau de process, le RedOX, les concentrations en NO3 et/ou en PO4.

Dans un mode de réalisation, la température du réacteur peut être régulée au moyen d'un raccordement à un réseau de chaleur existant et/ou par géothermie et/ou par l'utilisation d'un échangeur de chaleur placé à proximité du réseau d'assainissement.

Une alarme sur rendement négatif peut être déclenchée, par exemple si le flux de C02 éliminé en moyenne devient négatif.

Selon les modes de réalisation (et selon les types de données), l'échantillonnage des données peut être effectué toutes les 30 secondes, toutes les 5 minutes, toutes les 15 minutes, toutes les heures ou selon des seuils prédéfinis (et/ou configurables).

Le bioréacteur ou l'habillage urbain peut comprendre un ou plusieurs capteurs dont les mesures permettent après traitement des informations par une unité de calcul la mesure de la quantité de matière organique rejetée au réseau d'assainissement. Dans un mode de réalisation, les rejets ou effluents du bioréacteur sont mesurés et surveillés (qualitativement et/ou quantitativement), notamment à distance (e.g. moyens de communication filaires ou sans-fil, par télé-relevés, chiffrés ou en clair, etc). Le système de télé relève peut notamment être-mono directionnel ou bidirectionnel.

Un certain nombre de paramètres relatifs au réseau d'assainissement peuvent être surveillés et/ou régulés. Ces paramètres peuvent comprendre notamment : le niveau de eaux (afin d'ajuster les vidanges à des moments opportuns et/ou à des endroits appropriés de la grille de bioréacteurs en réseau), les propriétés physiques des boues mesurées localement ou de manière globale et statistique (e.g. PH, turbidité, conductivité, RedOX, concentrations en NO3 et/ou en PO4).

De manière générale et non limitative, les senseurs (ou capteurs) embarqués par le système selon l'invention (par exemple dans l'habillage urbain du photo bioréacteur et/ou dans le bioréacteur lui-même et/ou dans le réseau d'assainissement) peuvent comprendre un ou plusieurs senseurs ou capteurs choisis parmi des capteurs de pression, de flux, de température, d'oxygène, de vitesse, de mouvement, de position, de localisation, de radioactivité, d'énergie, de produits ou de composants chimiques (e.g. monoxyde d'azote, ozone, fumée, polluants, etc) ou de produits ou composants biologiques (e.g. virus, contaminants, pollens, etc). Les capteurs peuvent comprendre un ou plusieurs MEMS, magnétomètres, hygromètres, gyroscopes, accéléromètres, bio-senseurs, radars, sonars, caméras, scanners 3D etc.

De manière générale et non limitative, les actuateurs ou actionneurs peuvent être de type pneumatique, hydraulique, électrique, mécanique, magnétique, à effet Pelletier, piézoélectrique ou à électroluminescence, etc. Ils peuvent par exemple comprendre un ou plusieurs vérins, moteurs, résistances chauffantes, lampes, enceintes acoustiques, électroaimants, ou bien encore des thermo refroidisseurs, des ioniseurs, des vannes, des soupapes, des enrouleurs, etc.

De manière générale, la supervision du système global couvre le contrôle de i) l'habillage urbain et des ses capteurs/actionneurs, ii) du bioréacteur en tant que tel et iii) le réseau d'assainissement. La supervision globale peut comprendre la réception, l'analyse et la prédiction de données de type météorologique. Par exemple, les prévisions pluviométriques peuvent influencer les différentes vidanges des bioréacteurs mis en réseau (certaines zones seront vidangées avant d'autres par exemple). Les facteurs liés à la température et aux apports de lumière ayant des conséquences directes sur l'évolution de la biomasse peuvent également être suivies.

La supervision du système global et/ou d'un ou de plusieurs réacteurs en particulier peut être effectuée de manière automatique, semi-automatique ou manuelle. Elle peut être effectuée à distance et/ou localement (certaines opérations peuvent requérir certaines autorisations et/ou une présence physique sur place). La régulation du système peut être effectuée de manière fixe (« poste de contrôle) et/ou en mobilité. De manière générale, un portail web comportant des services web et/ou des applications logicielles (« apps ») peut permettre d'accéder aux données de suivi des réacteurs et/ou peut en permettre la prise de contrôle. Via une ou plusieurs « apps », éventuellement sécurisées, une variété de terminaux peut être utilisée pour la consultation des données et/ou la prise de contrôle d'un réacteur ou de la grille de réacteurs, notamment des smartphones, tablettes, ordinateurs portables ou serveurs. Des droits d'accès peuvent être définis. Des interfaces utilisateur utilisant des technologies tactiles, de réalité augmentée et/ou virtuelle peuvent être utilisées.

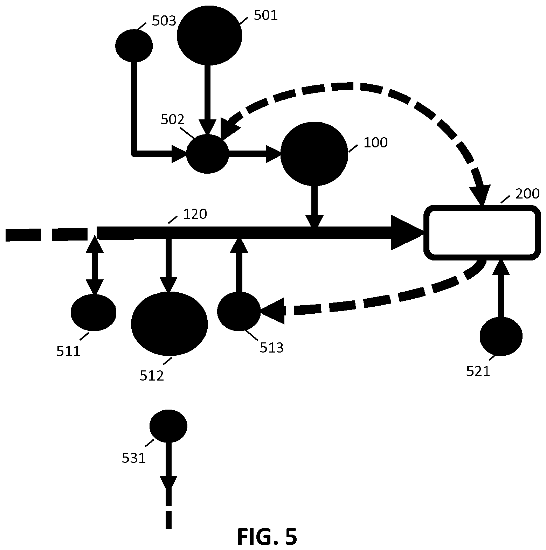

La figure 5 montre un exemple de réseau de bioréacteurs, i.e. une pluralité de réacteurs interconnectés au réseau d'assainissement. Certains puits sont des photo-bioréacteurs, d'autres pas (e.g. des bioréacteurs à bactéries génétiquement modifiées). En matière de topologie, les puits 100, 511, 512 et 513 sont directement raccordés au réseau d'assainissement et des puits 501, 502, 503 indirectement raccordés par l'intermédiaire du puits 100. Le réacteur 511 est bidirectionnel : il peut rejeter ses effluents dans le réseau d'assainissement mais également en extraire de la matière par exemple pour traitement (à l'instar du réacteur 512). Le puits 513, comme le puits 100, est un puits de carbone comprenant un photo-bioréacteur rejetant ses effluents dans le réseau d'assainissement. Le puits 100 est un photo-bioréacteur en réseau avec plusieurs autres réacteurs. Dans l'exemple, le puits 502 est une colonne Morris selon l'invention et le puits 100 est un abribus adjacent dont les réservoirs de biomasse communiquent. Le puits 501 correspond à la façade d'un bâtiment mettant en œuvre un système selon l'invention. Le puits 503 est une portion de trottoir vitrée selon l'invention. Le puits 531 est un puits selon l'invention raccordable mais non raccordé au réseau 120. Pour ce puits 531, le compost des micro-algues peut être collecté sur site (ou déversé dans un autre réseau d'assainissement distinct du réseau 120). La station d'épuration 200 peut faire partie de la régulation d'ensemble.

Différents modes de régulation d'un réseau de puits de carbone raccordés ou raccordables sont décrits ci-après.

Les modes de régulation peuvent être variables et diversement contrôlables, depuis l'amont vers l'aval, i.e. depuis la capture de l'air et/ou des polluants, l'activité du bioréacteur, la gestion des rejets des effluents, des niveaux des eaux usées mesurées ou simulées dans les réseaux d'assainissement, les prévisions météorologiques et leurs conséquences en matière de dilution, etc).

La figure 5 montre un parc ou un réseau de puits de carbone raccordés et/ou raccordables au réseau d'assainissement 120 lequel aboutit à la station d'épuration 200, laquelle produit le biogaz réinjecté dans les réseaux d'énergie.

La topologie du graphe des réacteurs interconnectés permet une régulation plus ou moins sophistiquée, c'est-à-dire selon des rétroactions multiples et diverses. Le graphe correspond à une grille (« grid ») d'entités interconnectées. Cette grille de puits de carbone peut être supervisée en appliquant des systèmes de régulation de systèmes complexes (logique formelle, logique floue, négociations de pair-à-pair, mécanismes de vote), que cette régulation soit partiellement le fait de l'homme (opérateur ou superviseur humain) et/ou du fait de la machine (décisions locales effectuées par ordinateur, arc-réflexes, etc).

Les réacteurs de puits peuvent être instrumentés (c'est-à-dire embarquer des capteurs de mesure spécifiant l'état de la croissance de la biomasse ou de nombreux autres paramètres tels que température, concentration etc), ainsi que le réseau d'assainissement (e.g. travaux en cours, topographie, charges en polluants ou en concentration à différents endroits etc).

Par ailleurs, à côté ou au moyen des capteurs de mesure quantifiant la réalité, des modèles empiriques et/ou théoriques de supervision peuvent permettre réguler l'ensemble du système. Le périmètre du système peut comprendre la modélisation des flux et de la qualité de l'air (e.g. à des granularités d'échelle variables par exemple de la rue à l'agglomération entière), le réseau des puits (e.g. types de réacteurs, cycles de biomasse, capacités, etc), le réseau d'assainissement en lui-même (e.g. niveaux des eaux, travaux de maintenance, prévisions météorologiques, etc) et le réseau d'épuration (e.g. cycles de décantation, méthanisation, etc)

Dans un mode de réalisation (« push »), l'aval ne contrôle pas l'amont (même partiellement). Par exemple, la station d'épuration 200 « subit » passivement les déversements cumulés des puits de carbone en réseau. Une régulation peut alors s'effectuer en amont le cas échéant, par exemple en déterminant la charge de la station d'épuration en aval (e.g. constatée ou mesurée ou calculée ou simulée). Les puits peuvent par exemple communiquer entre eux, « dialoguer » en implémentant des systèmes de décision entre pairs pour voter ou décider quels seront les réacteurs autorisés à se vidanger ou non, selon quelles séquences, etc.

Dans un mode de réalisation (« pull »), l'aval contrôle l'amont (au moins partiellement). Par exemple, la station d'épuration 200 en fonction de sa charge et de ses propres cycles de méthanisation, contrôle directement ou indirectement les vidanges des puits de carbone en amont. Dans le cas d'un parc hétérogène (combinant photo-bioréacteurs et réacteurs à biologie synthétique avec des bactéries génétiquement modifiées), la station d'épuration 200 peut influencer (ou autoriser ou favoriser ou pondérer ou faciliter ou accélérer ou retarder ou interdire ou décaler) les vidanges de certains puits, compte tenu des effets de dilution cumulés ou de la composition résultante des eaux usées collectées.

Dans des modes de réalisation (« hybrides »), amont et aval contribuent de manière diverses à la régulation globale. Par exemple, certains réacteurs constatant une surcharge de l'épuration en aval accentueront l'opacité des surfaces exposant les micro-algues afin d'amoindrir la croissance de biomasse. Si un besoin local d'épuration d'air devient pressant (au-delà d'un certain seuil prédéfini), car une zone habitée devient polluée, et que simultanément les capacités d'absorption en aval ne permettent pas une évacuation à court terme, une vidange ponctuelle (par camion ou éjection d'un compost après dessiccation) peut permettre de résoudre des problèmes ponctuels ou « de crête » sur le réseau. Tous les réacteurs n'étant pas équipés de modes d'évacuation duale (compost physique et réseau d'égouts), la gestion du graphe sous-jacent au réseau de puits de carbone selon l'invention peut permettre des solutions alternatives.

Des exemples de gestion de la grille ou du réseau de bioréacteurs sont décrits ci-après (ces scénarios ne sont en rien limitatifs). Dans un premier scénario, si des travaux sont en cours dans une zone particulière du réseau d'assainissement, le superviseur (humain et/ou machine) peut arrêter temporairement les vidanges des bioréacteurs de la zone concernée et/ou peut diminuer le métabolisme des bioréacteurs en diminuant les apports de lumière. Dans un second scénario, une alerte pollution étant en cours, l'activité des bioréacteurs peut être maximisée autant qu'il est possible pour chacun des bioréacteurs. Dans un troisième scénario, si la qualité de l'air urbain est déterminée comme satisfaisante, les apports de lumière pourront maintenir les algues en activité mais sans passer à un mode épuratoire. Dans un quatrième scénario, des orages violents étant prévus, les vidanges des bioréacteurs proches de la saturation en biomasse peuvent être effectuées de manière anticipée afin de profiter de capacités de transport et les batteries des panneaux photovoltaïques pourront être rechargées au maximum de façon à poursuivre les éclairages pendant les perturbations météorologiques à faible luminosité. Dans un cinquième scénario, en cas de niveau haut dans le réseau d'assainissement (pluies et/ou de crues et/ou durant les heures de pointe, e.g. match de football) lequel niveau élevé conduit généralement à des surcharges et/ou des dysfonctionnements des stations d'épuration en aval (et peuvent conduire à des rejets non traités dans le milieu), il sera généralement évité de procéder à des vidanges dans ce type de contexte. Alternativement, des séquences de vidange appropriées peuvent être prévues par zones (interzones) et/ou à l'intérieur des zones (intra-zones), etc. Dans un sixième scénario, la station d'épuration étant en maintenance, les vidanges seront évitées autant que possible.

La présente invention peut s'implémenter à partir d'éléments matériel et/ou logiciel. Elle peut être disponible en tant que produit programme d'ordinateur sur un support lisible par ordinateur. Le support peut être électronique, magnétique, optique ou électromagnétique. Les termes programme d'ordinateur et logiciel sont utilisés ici dans un sens général pour faire référence à tout type de code informatique (par exemple, un logiciel d'application, un micro logiciel, un microcode, ou toute autre forme d'instruction d'ordinateur) qui peut être utilisé pour programmer un ou plusieurs processeurs pour mettre en œuvre des aspects des techniques décrites ici. Les moyens ou ressources informatiques peuvent notamment être distribués ("*Cloud computing*"), éventuellement avec selon des technologies de pair-à-pair. Le code logiciel peut être exécuté sur n'importe quel processeur approprié (par exemple, un microprocesseur) ou cœur de processeur ou un ensemble de processeurs, qu'ils soient prévus dans un dispositif de calcul unique ou répartis entre plusieurs dispositifs de calcul (par exemple tels qu'éventuellement accessibles dans l'environnement du dispositif).

## Revendications

1. Procédé mis en œuvre par ordinateur de régulation d'un système d'épuration d'air comprenant un bioréacteur, le procédé comprenant les étapes consistant à :
- recevoir les mesures des taux de concentration d'un ou de plusieurs polluants et/ou de particules dans des flux d'air en entrée et en sortie d'un bioréacteur contenant de l'eau et une biomasse épurant au moins partiellement une partie de ces polluants et/ou particules;
- en fonction de paramètres de régulation comprenant les mesures des taux de concentration reçues, déterminer un volume de biomasse à évacuer du bioréacteur vers un réseau d'assainissement raccordé au bioréacteur et un volume d'eau à réintroduire dans le bioréacteur ;
- évacuer ledit volume déterminé de biomasse dans ledit réseau d'assainissement ;
- réalimenter en eau le bioréacteur avec le volume d'eau déterminé ;
les paramètres de régulation comprenant des données externes au bioréacteur, ces données externes comprenant des données associées à l'état du réseau d'assainissement et/ou des données associées à l'état du réseau d'alimentation en eau du bioréacteur ;
les paramètres de régulation comprenant en outre des données de mesures du niveau des eaux usées présentes dans le réseau d'assainissement et/ou des données de prévisions météorologiques.

2. Procédé selon la revendication 1, le bioréacteur étant un photo bioréacteur et les paramètres de régulation comprenant des paramètres associés à l'activité interne du bioréacteur, ces paramètres comprenant une ou plusieurs données choisies parmi : le PH, la température, la turbidité, la conductivité mesurés dans le milieu de culture du bioréacteur, et la quantification des flux lumineux reçu par le milieu de culture du bioréacteur.

3. Procédé selon la revendication 1, comprenant en outre des règles de gestion pour déterminer le volume de biomasse à évacuer.

4. Procédé selon l'une des revendications 1 à 3, le bioréacteur comprenant des capteurs de mesure et/ou des actionneurs pilotables à distance afin de réguler l'activité du réacteur.

5. Procédé selon l'une quelconque des revendications précédentes, comprenant une étape consistant à recevoir les données associées à une pluralité de bioréacteurs raccordés à un même réseau d'assainissement, lequel réseau d'assainissement est éventuellement raccordé à une ou plusieurs stations de production de biogaz.

6. Procédé selon la revendication 5, où la pluralité de bioréacteurs est raccordée à un même réseau de distribution d'eau pour alimenter le milieu de culture des bioréacteurs.

7. Procédé selon la revendication 6, comprenant une étape consistant à réguler la pluralité des bioréacteurs en fonction de données de géolocalisation desdits bioréacteurs, de données associées à l'état du réseau d'assainissement et/ou des données associées à l'état du réseau d'alimentation en eau du bioréacteur et/ou aux données associées à l'état de la production de biogaz.

8. Produit programme d'ordinateur, ledit programme d'ordinateur comprenant des instructions de code permettant d'effectuer les étapes du procédé selon l'une quelconque des revendications 1 à 7, lorsque ledit programme est exécuté sur le système de traitement d'air des revendications 9 à 14.

9. Système de traitement d'air comprenant un bioréacteur comprenant une entrée et une sortie, le bioréacteur contenant de l'eau et une biomasse épurant au moins partiellement des polluants et/ou particules, le bioréacteur est régulé par un système de contrôle-commande mis en oeuvre par ordinateur, permettant de mesurer, d'enregistrer et de piloter tous les paramètres de fonctionnement du bioréacteur, **caractérisé en ce que** le système de traitement d'air comprend:
- des moyens pour mesurer des taux de concentration d'un ou de plusieurs polluants et/ou de particules dans des flux d'air en entrée et en sortie du bioréacteur;
- des moyens pour déterminer un volume de biomasse à évacuer du bioréacteur vers un réseau d'assainissement raccordé au bioréacteur et un volume d'eau à réintroduire dans le bioréacteur, en fonction de paramètres de régulation comprenant lesdites mesures des taux de concentration;
- des moyens pour évacuer ledit volume de biomasse déterminé dans le réseau d'assainissement ;
- des moyens pour réalimenter en eau le bioréacteur avec le volume d'eau déterminé ;
les paramètres de régulation comprenant des données externes au bioréacteur, ces données externes comprenant des données associées à l'état du réseau d'assainissement et/ou des données associées à l'état du réseau d'alimentation en eau du bioréacteur ;
les paramètres de régulation comprenant en outre des données de mesures du niveau des eaux usées présentes dans le réseau d'assainissement et/ou des données de prévisions météorologiques.

10. Système selon la revendication 9, **caractérisé en ce que** le bioréacteur est un photo-bioréacteur comprenant des micro-organismes photosynthétiques.

11. Système selon l'une des revendications 9 et 10, **caractérisé en ce que** le moyen d'alimentation en eau du bioréacteur est un réseau de distribution d'eau permettant l'alimentation du milieu de culture du bioréacteur, et **en ce qu'**il comprend en outre un système de vidange comprenant au moins deux réservoirs et des électrovannes contrôlables à distance, les réservoirs étant configurés pour être vidangés en alternance de manière à maintenir une isolation fluidique entre le réseau d'eau et le réseau d'assainissement.

12. Système selon l'une des revendications 9 et 10, **caractérisé en ce que** le moyen d'alimentation en eau du bioréacteur est un réseau d'eau de ville non potable prétraité, et **en ce qu'**il comprend en outre un système de vidange comprenant au moins deux réservoirs et des électrovannes contrôlables à distance, les réservoirs étant configurés pour être vidangés en alternance de manière à maintenir une isolation fluidique entre le réseau d'eau et le réseau d'assainissement.

13. Système selon l'une des revendications 9 à 12, **caractérisé en ce que** le bioréacteur comprend en outre un ou plusieurs actionneurs pour réguler les débits d'air en entrée et/ou en sortie du bioréacteur, et/ou pour agiter la biomasse du réacteur, et/ou pour réguler l'influx lumineux naturel et/ou artificiel et/ou pour réguler la température.

14. Système selon l'une des revendications 9 à 13, **caractérisé en ce qu'**il comprend en outre un dispositif de communication permettant de contrôler à distance l'activité du bioréacteur.

## Patentansprüche

1. Computerimplementiertes Verfahren zur Regulierung eines Luftreinigungssystems, umfassend einen Bioreaktor, wobei das Verfahren folgende Schritte umfasst:
- Empfangen der Messungen der Konzentrationsraten eines oder mehrerer Schadstoffe und/oder von Partikeln in Luftströmen am Eingang und am Ausgang eines Bioreaktors, welcher Wasser und eine Biomasse enthält, welche mindestens teilweise einen Teil dieser Schadstoffe und/oder Partikel reinigt;
- angesichts von Regelungsparametern, welche die empfangenen Messungen der Konzentrationsraten umfassen, Bestimmen eines aus dem Bioreaktor abzuleitenden Volumens an Biomasse in Richtung eines Kanalisationsnetzes, welches an den Bioreaktor angeschlossen ist, und eines Wasservolumens, das in den Bioreaktor rückgeführt werden soll;
- Ableiten des bestimmten Volumens an Biomasse in das Kanalisationsnetz;
- Neuspeisen des Bioreaktors mit Wasser mit dem bestimmten Wasservolumen;
wobei die Regelungsparameter dem Bioreaktor gegenüber externe Daten umfassen, wobei diese externen Daten Daten umfassen, welche dem Zustand des Kanalisationsnetzes zugeordnet sind und/oder Daten, welche dem Zustand des Wasserspeisungsnetzes des Bioreaktors zugeordnet sind;
wobei die Regelungsparameter ferner Daten von Messungen des Pegels der in dem Kanalisationsnetz vorhandenen Abwässer und/oder meteorologische Vorhersagedaten umfassen.

2. Verfahren nach Anspruch 1, wobei der Bioreaktor ein Photobioreaktor ist und die Regelungsparameter Parameter umfassen, welche der internen Aktivität des Bioreaktors zugeordnet sind, wobei diese Parameter ein oder mehrere Daten umfassen, ausgewählt aus: dem pH-Wert, der Temperatur, der Trübung, der Leitfähigkeit, welche im Kulturmedium des Bioreaktors gemessen werden, und der Quantifizierung der durch das Kulturmedium des Bioreaktors empfangenen Lichtströme.

3. Verfahren nach Anspruch 1, ferner umfassend Verwaltungsregeln zum Bestimmen des abzuleitenden Volumens an Biomasse.

4. Verfahren nach einem der Ansprüche 1 bis 3, wobei der Bioreaktor Messsensoren und/oder fernsteuerbare Betätigungselemente umfasst, um die Aktivität des Reaktors zu regulieren.

5. Verfahren nach einem der vorhergehenden Ansprüche, umfassend einen Schritt, darin bestehend, die einer Vielzahl von Bioreaktoren zugeordneten Daten zu empfangen, welche an ein gleiches Kanalisationsnetz angeschlossen ist, wobei das Kanalisationsnetz eventuell an eine oder mehrere Biogas-Produktionsstationen angeschlossen ist.

6. Verfahren nach Anspruch 5, wobei die Vielzahl von Bioreaktoren an ein gleiches Wasserverteilungsnetz zur Speisung des Kulturmediums der Bioreaktoren angeschlossen ist.

7. Verfahren nach Anspruch 6, umfassend einen Schritt, darin bestehend, die Vielzahl von Bioreaktoren angesichts von Geolokalisierungsdaten der Bioreaktoren, von Daten, welche dem Zustand des Kanalisationsnetzes zugeordnet sind und/oder der Daten, welche dem Zustand des Wasserspeisungsnetzes des Bioreaktors zugeordnet sind und/oder der Daten, welche dem Zustand der Biogaserzeugung zugeordnet sind, zu regulieren.

8. Computerprogrammprodukt, wobei das Computerprogramm Code-Anweisungen umfasst, welche es ermöglichen, die Schritte des Verfahrens nach einem der Ansprüche 1 bis 7 durchzuführen, wenn das Programm auf dem Luftaufbereitungssystem nach den Ansprüchen 9 bis 14 ausgeführt wird.

9. Luftaufbereitungssystem, umfassend einen Bioreaktor, welcher einen Eingang und einen Ausgang umfasst, wobei der Bioreaktor Wasser und eine Biomasse enthält, welche mindestens teilweise Schadstoffe und/oder Partikel reinigt, wobei der Bioreaktor durch ein Kontroll- und Steuerungssystem reguliert wird, welches durch einen Computer implementiert wird, welches es ermöglicht, sämtliche Betriebsparameter des Bioreaktors zu messen, zu speichern und zu steuern, **dadurch gekennzeichnet, dass** das Luftaufbereitungssystem Folgendes umfasst:
- Mittel zum Messen der Konzentrationsraten eines oder mehrerer Schadstoffe und/oder von Partikeln in Luftströmen am Eingang und am Ausgang des Bioreaktors;
- Mittel zum Bestimmen eines aus dem Bioreaktor abzuleitenden Volumens an Biomasse in Richtung eines Kanalisationsnetzes, welches an den Bioreaktor angeschlossen ist, und eines Wasservolumens, das in den Bioreaktor rückgeführt werden soll, angesichts der Regulierungsparameter, welche die Messungen der Konzentrationsraten umfassen;
- Mittel zum Ableiten des bestimmten Biomassevolumens in das Kanalisationsnetz;
- Mittel zum Neuspeisen des Bioreaktors mit Wasser mit dem bestimmten Wasservolumen;
wobei die Regelungsparameter dem Bioreaktor gegenüber externe Daten umfassen, wobei diese externen Daten Daten umfassen, welche dem Zustand des Kanalisationsnetzes zugeordnet sind und/oder Daten, welche dem Zustand des Wasserspeisungsnetzes des Bioreaktors zugeordnet sind;
wobei die Regelungsparameter ferner Daten von Messungen des Pegels der in dem Kanalisationsnetz vorhandenen Abwässer und/oder meteorologische Vorhersagedaten umfassen.

10. System nach Anspruch 9, **dadurch gekennzeichnet, dass** der Bioreaktor ein Photobioreaktor ist, welcher photosynthetische Mikroorganismen umfasst.

11. System nach einem der Ansprüche 9 und 10, **dadurch gekennzeichnet, dass** das Wasserspeisungsmittel des Bioreaktors ein Wasserverteilungsnetz ist, welches die Speisung des Kulturmediums des Bioreaktors ermöglicht, und dadurch, dass es ferner ein Entleerungssystem umfasst, welches mindestens zwei Tanks und fernsteuerbare Magnetventile umfasst, wobei die Tanks konfiguriert sind, um abwechselnd dergestalt entleert zu werden, dass eine fluidische Isolation zwischen dem Wassernetz und dem Kanalisationsnetz beibehalten wird.

12. System nach einem der Ansprüche 9 und 10, **dadurch gekennzeichnet, dass** das Wasserspeisungsmittel des Bioreaktors ein Netz für nicht trinkbares, vorbehandeltes Stadtwasser ist, und dadurch, dass es ferner ein Entleerungssystem umfasst, welches mindestens zwei Tanks und fernsteuerbare Magnetventile umfasst, wobei die Tanks konfiguriert sind, um abwechselnd dergestalt entleert zu werden, dass eine fluidische Isolation zwischen dem Wassernetz und dem Kanalisationsnetz beibehalten wird.

13. System nach einem der Ansprüche 9 bis 12, **dadurch gekennzeichnet, dass** der Bioreaktor ferner ein oder mehrere Betätigungselemente zum Regulieren der Luftströme am Eingang und/oder am Ausgang des Bioreaktors umfasst, und/oder zum Rühren der Biomasse des Reaktors, und/oder zum Regulieren des natürlichen und/oder künstlichen Lichtzustroms und/oder zum Regulieren der Temperatur.

14. System nach einem der Ansprüche 9 bis 13, **dadurch gekennzeichnet, dass** es ferner eine Kommunikationsvorrichtung umfasst, welche die Fernsteuerung der Aktivität des Bioreaktors ermöglicht.

## Claims

1. A computer-implemented method for regulating an air purification system comprising a bioreactor, the method comprising the following steps:
- receiving measurements of the levels of concentration of one or more pollutants and/or particles in air flows entering and exiting a bioreactor containing water and a biomass at least partially purifying a part of these pollutants and/or particles;
- determining, as a function of regulation parameters comprising the received measurements of the levels of concentration, an amount of biomass to be discharged from the bioreactor to a sewage system connected to the bioreactor and an amount of water to be reintroduced into the bioreactor;
- discharging said determined amount of biomass into said sewage system;
- reintroducing water into the bioreactor with the determined amount of water;
the regulation parameters comprising data derived from outside the bioreactor, with these outside data comprising data associated with the state of the sewage system and/or data associated with the state of the bioreactor water supply system;
the regulation parameters further comprising data of measurements of the level of waste water present in the sewage system and/or weather forecasting data.

2. The method according to claim 1, the bioreactor being a photobioreactor and the regulation parameters comprising parameters associated with the internal activity of the bioreactor, these parameters comprising one or more data selected from among: the pH, the temperature, the turbidity, the conductivity measured in the bioreactor culture medium, and the quantification of the luminous flux received by the bioreactor culture medium.

3. The method according to claim 1, further comprising management rules for determining the amount of biomass to be discharged.

4. The method according to any of claims 1 to 3, the bioreactor comprising measurement sensors and/or remotely controllable actuators for regulating the activity of the reactor.

5. The method according to any one of the preceding claims, comprising a step involving receiving the data associated with a plurality of bioreactors connected to a same sewage system, which sewage system is possibly connected to one or more biogas production stations.

6. The method according to claim 5, wherein the plurality of bioreactors is connected to a same water distribution system for supplying the culture medium of the bioreactors.

7. The method according to claim 6, comprising a step involving regulating the plurality of bioreactors as a function of geolocation data of said bioreactors, data associated with the state of the sewage system and/or the data associated with the state of the bioreactor water supply system and/or the data associated with the state of biogas production.

8. A computer program product, said computer program comprising code instructions allowing to carry out the steps of the method according to any one of claims 1 to 7, when said program is executed on the air treatment system of claims 9 to 14.

9. An air treatment system comprising a bioreactor comprising an inlet and an outlet, the bioreactor containing water and a biomass at least partially purifying pollutants and/or particles, the bioreactor is regulated by a control-command system implemented by a computer, allowing all the operating parameters of the bioreactor to be measured, recorded and controlled, **characterised in that** the air treatment system comprises:
- means for measuring the levels of concentration of one or more pollutants and/or particles in air flows entering and exiting the bioreactor;
- means for determining an amount of biomass to be discharged from the bioreactor to a sewage system connected to the bioreactor and an amount of water to be reintroduced into the bioreactor, as a function of regulation parameters comprising said measurements of the levels of concentration;
- means for discharging said determined amount of biomass into the sewage system;
- means for reintroducing water into the bioreactor with the determined amount of water;
the regulation parameters comprising data derived from outside the bioreactor, with these outside data comprising data associated with the state of the sewage system and/or data associated with the state of the bioreactor water supply system;
the regulation parameters further comprising data of measurements of the level of waste water present in the sewage system and/or weather forecasting data.

10. The system according to claim 9, **characterised in that** the bioreactor is a photobioreactor comprising photosynthetic micro-organisms.

11. The system according to any of claims 9 and 10, **characterised in that** the bioreactor water supplying means is a water distribution system allowing the supply of the bioreactor culture medium, and **in that** it further comprises a drainage system comprising at least two tanks and remotely controllable solenoid valves, the tanks being configured to be alternately drained so as to maintain fluid isolation between the water system and the sewage system.

12. The system according to any of claims 9 and 10, **characterised in that** the bioreactor water supplying means is a pre-treated mains non-potable water system, and **in that** it further comprises a drainage system comprising at least two tanks and remotely controllable solenoid valves, the tanks being configured to be alternately drained so as to maintain fluid isolation between the water system and the sewage system.

13. The system according to any of claims 9 to 12, **characterised in that** the bioreactor further comprises one or more actuators for regulating the inlet and/or outlet air flows of the bioreactor, and/or for stirring the reactor biomass, and/or for regulating the natural and/or artificial luminous influx and/or for regulating the temperature.

14. The system according to any of claims 9 to 13, **characterised in that** it further comprises a communication device allowing to remotely control the activity of the bioreactor.
